# EUROPÄISCHE PATENTSCHRIFT

(11) **EP 0 752 396 B1**
(45) Veröffentlichungstag und Bekanntmachung des Hinweises auf die Patenterteilung: **06.11.2002**
(21) Anmeldenummer: 96110802.4
(22) Anmeldetag: 04.07.1996
(51) Int. Cl.: C04B 28/34, C04B 12/02

(54) **Anorganischer Schaumstoff für Brandschutz- und Isolierzwecke sowie Verfahren zu seiner Herstellung**
Inorganic foamed material suitable for fireproofing and insulation and a method of producing the same
Produit alvéolaire inorganique pour ignifugeage et isolation et son procédé de fabrication

(30) Priorität: 06.07.1995 DE 19524563
(43) Veröffentlichungstag der Anmeldung: 08.01.1997
(73) Patentinhaber: Chemetall GmbH, 60487 Frankfurt (DE)
(72) Erfinder: Bastian, Wolfgang, 63303 Dreieich (DE); Kempf, Horst, 63667 Nidda (DE); Lind, Jörg, 67067 Ludwigshafen (DE); Sterrer, Manfred, 4850 Timelkam (AT)
(74) Vertreter: Uppena, Franz, Dr.

(56) Entgegenhaltungen:
- EP-A- 0 136 378
- EP-A- 0 247 238
- EP-A- 0 282 240
- US-A- 3 891 009

## Beschreibung

Die Erfindung bezieht sich auf einen anorganischen Schaumstoff für Brandschutz- und Isolierzwecke sowie auf ein Verfahren zu seiner Herstellung.

Aus der EP-PS 0 136 378 ist ein Zweikomponentensystem zur Bildung eines anorganischen Harzes bekannt, das als Werkstoff für den Brandschutz und die Wärmeisolierung verwendet werden kann. Das Zweikomponentensystem besteht aus einer flüssigen Komponente A, die eine wäßrige Lösung von Aluminiumdihydrogenphosphat und/oder Magnesiumhydrogenphosphat enthält, und aus einer flüssigen Komponente B, die eine wäßrige Suspension eines phosphatreaktiven Bestandteils enthält, der Wollastonit, Ca₃(Si₃O₉) und/oder Magnesiumoxid ist, wobei die Viskosität jeder Komponente derart gewählt wird, daß die zwei Komponenten unter Bildung einer Aufschlämmung schnell und gründlich gemischt werden können, welche exotherm unter Bildung des anorganischen Harzes reagiert. Bei dem bekannten Zweikomponentensystem ist vorgesehen, daß die Komponente B zusätzlich ein nichtreaktives Phosphatdispergiermittel umfaßt und daß beide Komponenten jeweils eine Viskosität von 700 bis 10000 Centipoises bei 25°C besitzen. In der EP-PS 0 136 378 wird ferner vorgeschlagen, daß die Komponente A ein inertes Füllmittel in einer Menge bis zu 50 Gew% des Gesamtgewichts der Komponenten A und B einschließt, wobei als Füllmittel vorzugsweise SiO₂ verwendet wird und wobei das Füllmittel ein vorgeformtes, zellenartiges Material ist. Beide Komponenten des bekannten Zweikomponentensystems können ein wasserabstoßendes, oberflächenaktives Mittel in einer Gesamtmenge von 0,2 bis 5 Gew% des Gesamtgewichts der Komponenten A und B enthalten, wobei das Mittel aus hydrophobem SiO₂, einem Titanat, einem Silikon, einem Wachs oder einem Stearat besteht. Die Komponente A hat einen Feststoffgehalt von 20 bis 70 Gew%. Zur Herstellung eines Harzes mit einem zellenartigen Aufbau wird das bekannte Zweikomponentensystem in der Weise modifiziert, daß beide Komponenten A und B ein wasserabstoßendes, oberflächenaktives Mittel enthalten, daß die Komponente B ein Treibmittel enthält, welches ein Gas durch Reaktion, Zersetzung oder Verdampfung in die Aufschlämmung freisetzen kann, und daß das Dispergiermittel den pH-Wert der Aufschlämmung nicht über 10 erhöht. Als Treibmittel wird vorzugsweise CaCO₃ in einer Menge von 0,2 bis 15 Gew% des Gesamtgewichts der Komponenten A und B eingesetzt.

Die EP-PS 0 147 390 offenbart einen Stoff, der für Brandschutz- und Isolierzwecke eingesetzt werden kann und der aus MgO, Al₂O₃, Aluminiumdihydrogenphosphat und Wasser besteht. Dieser Stoff wird aus einer nichtammoniakalischen, formbaren Mischung aus MgO, Al₂O₃, einem Aggregat und einer sauren Lösung aus wäßrigem Aluminiumdihyrogenphosphat erhalten. Als Aggregat werden vorzugsweise Glasperlen, Perlit, Steine oder feuerfeste Materialien verwendet. Der Stoff kann beispielsweise 10 Gew% MgO, 30 Gew% Al₂O₃, 30 Gew% Aggregat und 30 Gew% saure Lösung enthalten. Mit dem aus der EP-PS 0 147 390 bekannten Stoff werden Paneele beschichtet.

Ferner ist aus EP-A-247 238 ein anorganischer Schaumstoff bekannt, der Aluminiumphosphat als Bindemittelgerüst aufweist. Die Verschäumung erfolgt mit einem Tensid als Hilfsmittel.

Ein weiterer anorganischer Schaumstoff dieses Typs ist in EP-A-282 240 beschrieben, der aus einer Ausgangsmischung mit Dolomit als Blähmittel hergestellt wird.

Der Erfindung liegt die Aufgabe zugrunde, einen anorganischen Schaumstoff für Brandschutz- und Isolierzwecke zu schaffen, der auf einfache Weise hergestellt und verarbeitet werden kann, der ein niedriges Raumgewicht besitzt, der auch bei hohen Temperaturen eine hohe mechanische Festigkeit hat und der nicht entflammbar ist.

Die der Erfindung zugrundeliegende Aufgabe wird durch die Schaftung eines anorganischen Schaumstoffs gelöst, der hergestellt wird aus einer Mischung bestehend aus 40 - 90 Gewichtsteilen einer Lösung, die 20 bis 70 Gew% Al(H₂PO₄)₃ und 30 bis 80 Gew% Wasser enthält, aus 5 bis 55 Gewichtsteilen eines Gemischs, das 10 bis 70 Gew% MgO, 10 bis 70 Gew% Glimmer, 10 bis 70 Gew% Aluminiumhydroxid und 2 bis 20 Gew% MnO₂ enthält, sowie aus 1 bis 30 Gewichtsteilen eines Schaumbildners, der 3 bis 33 Gew% H₂O₂ und 67 bis 97 Gew% Wasser enthält. Glimmer sind nach einer Fläche spaltbare Tonerdesilikate, die eine helle Farbe (Muskovit) oder eine dunkle Farbe (Biotit, Phlogopit) haben. Die Härte der Glimmer liegt zwischen 2 und 3 und ihre Dichte beträgt 2,7 bis 3,1. Die Glimmer liegen in bis zu 0,1 µm dünnen, biegsamen Plättchen vor. Das Aluminiumhydroxid hat einen Al(OH)₃-Gehalt > 98 %.

Der Schäumungsfaktor des erfindungsgemäßen Schaumstoffs liegt bei 2 bis 10, d.h., daß das Volumen des Schaumstoffs etwa 2 bis 10 mal größer ist, als das Volumen der Ausgangsstoffe. Der erfindungsgemäße Schaumstoff hat eine, vom Raumgewicht abhängige, relativ hohe mechanische Festigkeit und ein Raumgewicht von ca. 100 bis 800 kg/m³. Er eignet sich sehr gut zur Wärmeisolierung, da seine Wärmeleitfähigkeit gering ist. Er ist nicht entflammbar, da er keine organischen Verbindungen enthält. Daher eignet sich der erfindungsgemäße Schaumstoff auch für den Brandschutz.

Aus einer Ausgangsmischung, bestehend aus 45 bis 80 Gewichtsteilen einer Lösung, die 40 bis 60 Gew% Al(H₂PO₄)₃ und 40 bis 60 Gew% Wasser enthält, aus 10 bis 50 Gewichtsteilen eines Gemischs, das 10 bis 50 Gew% MgO, 10 bis 50 Gew% Glimmer, 10 bis 50 Gew% Aluminiumhydroxid und 2 bis 10 Gew% MnO₂ enthält, sowie aus 1 bis 20 Gewichtsteilen eines Schaumbildners, der 5 bis 30 Gew% H₂O₂ und 70 bis 95 Gew% Wasser enthält, ist ein anorganischer Schaumstoff herstellbar, der sich besonders gut für Isolierzwecke sowie für den Brandschutz eignet.

Die der Erfindung zugrundeliegende Aufgabe wird ferner durch ein Verfahren zur Herstellung des anorganischen Schaumstoffs gelöst, bei dem zunächst in der Al(H₂PO₄)₃-Lösung das aus MgO, Glimmer, Aluminiumhydroxid und MnO₂ bestehende Gemisch bei Raumtemperatur unter Rühren dispergiert wird, bei dem danach der Schaumbildner in die Dispersion unter Rühren eingebracht wird, bei dem die Mischung anschließend in Hohlräume gefüllt wird, bei dem die Schäumungszeit 0,5 bis 10 Minuten beträgt und bei dem schließlich die Abkühlung des Schaumstoffs auf Raumtemperatur eintritt. Die Schaumbildung erfolgt durch den Sauerstoff, der durch die von MnO₂ katalysierte Zersetzung des H₂O₂ entsteht. Während der Schäumungszeit tritt durch die exotherme Reaktion des Al(H₂PO₄)₃ mit dem MgO bzw. dem Glimmer und dem Aluminiumhydroxid eine Erwärmung ein, und gleichzeitig findet durch die Schaumbildung eine Volumenvergrößerung um einen Faktor von 2 bis 10 statt. Die Aushärtezeit des gebildeten Schaums kann zwischen 1 Minute und 24 Stunden variiert werden. Die ausgeschäumten Hohlräume können als Bauteile für den Brandschutz oder als Bauteile für die Wärmeisolation eingesetzt werden. Unter anderem ist es möglich, den erfindungsgemäßen Schaumstoff in Hohlraum-Formen zu erzeugen, ihn anschließend zu zerteilen und beispielsweise für Isolierzwecke zu verwenden.

Die Erfindung ermöglicht kurze Mischzeiten für die einzelnen Komponenten des anorganischen Schaumstoffs sowie eine langsame und gleichmäßige Schaumbildung und Aushärtung des Schaums. Ferner gestattet die Erfindung eine unabhängige Einstellung der Schäumungszeit und des Schäumungsfaktors durch Variation der H₂O₂- und der Braunstein-Menge einerseits und der Aushärtezeit des Schaums durch Variation der MgO-Menge andererseits. Der gebildete Schaum ist feinporig und deshalb besonders stabil; er ist daher insbesondere zum Ausschäumen großer Volumina geeignet. Der Schaumstoff hat eine hohe Festigkeit sowie eine gute Plastizität. Die Verwendung von plättchenförmigem Glimmer führt zu einem wenig spröden Schaumstoff. Da Braunstein den Aushärtevorgang nicht beeinflußt, kann er länger und homogener in die Mischung eingetragen werden als bekannte Karbonatpulver. Außerdem läßt sich die H₂O₂-Lösung wesentlich leichter in der Suspension verteilen als pulverförmiges Karbonat, so daß ein gleichmäßiges Schäumen resultiert. Die homogene Verteilung des Braunsteins wird durch seine große Feinheit unterstützt. Der Beginn der Schaumbildung kann durch den Einsatz von beschichtetem Braunstein verzögert werden. Die Mischung der Schaumstoff-Bestandteile erfolgt in vorteilhafter Weise lediglich in einem Mischaggregat.

Der Gegenstand der Erfindung wird nachfolgend anhand eines Ausführungsbeispiels näher erläutert.

100 g einer wäßrigen Lösung, die 50 Gew% Al(H₂PO₄)₃ enthält, werden in einem Kunststoffbecher vorgelegt, der ein Volumen von 500 ml hat. Unter intensivem Rühren wird in diese Lösung ein Feststoffgemisch eingetragen, das aus 20 g MgO, 30 g Glimmer, 50 g Aluminiumhydroxid und 10 g Braunstein besteht. Das MgO hat eine Reinheit > 95 %. Das Aluminiumhydroxid hat einen Aluminiumgehalt, berechnet als Al₂O₃, von 65 %. Die Teilchengröße des Braunsteins ist < 100 µm. Die Teilchengröße des Glimmers beträgt 60 mesh. Ca. 60 Sekunden nach Zugabe der Feststoffmischung werden 10 g einer 18%igen wäßrigen H₂O₂-Lösung hinzugefügt und unter Rühren homogen verteilt. Nach einer Mischzeit von 5 Sekunden schäumt das Gemisch ca. 1 Minute auf und vergrößert dabei sein ursprüngliches Volumen um 400 bis 500 %. Der Schaum wird nach ca. 6 Minuten aus der Form entnommen; während dieser Zeit erfolgt zwar eine gewisse Härtung aber noch keine endgültige Verfestigung des Schaumstoffs. Der aus dem erfindungsgemäßen Schaumstoff bestehende Probekörper wird 3 Tage bei Raumtemperatur an Luft gelagert; dabei kühlt er ab und härtet während dieser Zeit vollständig aus. Nach 3 Tagen hat er ein Raumgewicht von 0,22 g/cm³ und eine Druckfestigkeit von 21 N/cm². Durch eine Druckbelastung von ca. 11000 N/cm² erfährt der Probekörper eine irreversible Stauchung um 12 %. Dabei bleibt die mechanische Integrität des Materials erhalten.

## Patentansprüche

1. Anorganischer Schaumstoff, hergestelt aus einer Mischung, bestehend aus 40 bis 90 Gewichtsteilen einer Lösung, die 20 bis 70 Gew% Al(H₂PO₄)₃ und 30 bis 80 Gew% Wasser enthält, aus 5 bis 55 Gewichtsteilen eines Gemischs, das 10 bis 70 Gew% MgO, 10 bis 70 Gew% Glimmer, 10 bis 70 Gew% Aluminiumhydroxid und 2 bis 20 Gew% MnO₂ enthält, sowie aus 1 bis 30 Gewichtsteilen eines Schaumbildners, der 3 bis 33 Gew% H₂O₂ und 67 bis 97 Gew% Wasser enthält.

2. Schaumstoff nach Anspruch 1, hergestellt aus einer Mischung, bestehend aus 45 bis 80 Gewichtsteilen einer Lösung, die 40 bis 60 Gew% Al(H₂PO₄)₃ und 40 bis 60 Gew% Wasser enthält, aus 10 bis 50 Gewichtsteilen eines Gemischs, das 10 bis 50 Gew% MgO, 10 bis 50 Gew% Glimmer, 10 bis 50 Gew% Aluminiumhydroxid und 2 bis 10 Gew% MnO₂ enthält, sowie aus 1 bis 20 Gewichtsteilen eines Schaumbildners, der 5 bis 30 Gew% H₂O₂ und 70 bis 95 Gew% Wasser enthält.

3. Verfahren zur Herstellung des anorganischen Schaumstoffs nach den Ansprüchen 1 bis 2, bei dem zunächst in der Al(H₂PO₄)₃-Lösung das aus MgO, Glimmer, Aluminiumhydroxid und MnO₂ bestehende Gemisch bei Raumtemperatur unter Rühren dispergiert wird, bei dem danach der Schaumbildner in die Dispersion unter Rühren eingebracht wird, bei dem die Mischung anschließend in Hohlräume gefüllt wird, bei dem die Schäumungszeit 0,5 bis 10 Minuten beträgt und bei dem schließlich die Abkühlung des Schaumstoffs auf Raumtemperatur eintritt.

## Claims

1. Inorganic foam material produced from a mixture consisting of 40 to 90 parts by weight of a solution that contains 20 to 70% by weight Al(H₂PO₄)₃ and 30 to 80% by weight water, of 5 to 55 parts by weight of a mixture that contains 10 to 70% by weight MgO, 10 to 70% by weight mica, 10 to 70% by weight aluminium hydroxide and 2 to 20% by weight MnO₂, and also of 1 to 30 parts by weight of a foaming agent that contains 3 to 33% by weight H₂O₂ and 67 to 97% by weight water.

2. Foam material according to claim 1, produced from a mixture consisting of 45 to 80 parts by weight of a solution that contains 40 to 60% by weight Al(H₂PO₄)₃ and 40 to 60% by weight water, of 10 to 50 parts by weight of a mixture that contains 10 to 50% by weight MgO, 10 to 50% by weight mica, 10 to 50% by weight aluminium hydroxide and 2 to 10% by weight MnO₂, and also of 1 to 20 parts by weight of a foaming agent that contains 5 to 30% by weight H₂O₂ and 70 to 95% by weight water.

3. Method for producing the inorganic foam material according to claims 1 to 2, wherein in the first instance, the mixture of MgO, mica, aluminium hydroxide and MnO₂ is dispersed in the Al(H₂PO₄)₃ solution at room temperature whilst subject to stirring, wherein afterwards the foaming agent is introduced into the stirred dispersion, wherein the mixture is subsequently poured into cavities, wherein the foaming time amounts to 0.5 to 10 minutes, and wherein finally cooling of the foam material occurs at room temperature.

## Revendications

1. Produit alvéolaire minéral, préparé à partir d'un mélange constitué de 40 à 90 parties en poids d'une solution contenant de 20 à 70 % en poids d'Al(H₂PO₄)₃ et de 30 à 80 % d'eau, de 5 à 55 parties en poids d'un mélange contenant de 10 à 70 % en poids de MgO, de 10 à 70 % en poids de mica, de 10 à 70 % en poids d'hydroxyde d'aluminium et de 2 à 20 % en poids de MnO₂, ainsi que de 1 à 30 parties en poids d'un agent d'expansion contenant de 3 à 33 % en poids de H₂O₂ et de 67 à 97 % en poids d'eau.

2. Produit alvéolaire selon la revendication 1, préparé à partir d'un mélange constitué de 45 à 80 parties en poids d'une solution contenant de 40 à 60 % en poids d'Al(H₂PO₄)₃ et de 40 à 60 % d'eau, de 10 à 50 parties en poids d'un mélange contenant de 10 à 50 % en poids de MgO, de 10 à 50 % en poids de mica, de 10 à 50 % en poids d'hydroxyde d'aluminium et de 2 à 10 % en poids de MnO₂, ainsi que de 1 à 20 parties en poids d'un agent d'expansion contenant de 5 à 30 % en poids de H₂O₂ et de 70 à 95 % en poids d'eau.

3. Procédé de préparation d'un produit alvéolaire minéral selon la revendication 1 ou 2, dans lequel on disperse tout d'abord à température ambiante sous agitation le mélange constitué de MgO, de mica, d'hydroxyde d'aluminium et de MnO dans la solution de Al(H₂PO₄)₃, dans lequel on incorpore ensuite l'agent d'expansion sous agitation dans la dispersion obtenue, dans lequel on remplit ensuite des cavités avec le mélange formé, dans lequel le temps d'expansion est compris entre 0,5 et 10 minutes, et dans lequel on refroidit ensuite le produit alvéolaire jusqu'à la température ambiante.
